# EUROPEAN PATENT APPLICATION

(11) **EP 3 006 263 A1**
(43) Date of publication of application: **13.04.2016**
(21) Application number: 14808091.4
(22) Date of filing: 16.05.2014
(51) Int. Cl.: B60N 2/56, A47C 7/74, G01K 1/14, G01K 1/16

(54) **COMFORTABLE TEMPERATURE CONTROL DEVICE UTILIZING HEAT FLUX SENSOR**

(30) Priority: 04.06.2013 JP 2013117750; 25.10.2013 JP 2013222261
(71) Applicant: DENSO CORPORATION, Kariya-city, Aichi 448-8661 (JP)
(72) Inventor: SHIMIZU, Motoki, Kariya-city Aichi 448-8661 (JP); YAZAKI, Yoshitaro, Kariya-city Aichi 448-8661 (JP); SHIRAISHI, Yoshihiko, Kariya-city Aichi 448-8661 (JP); TANAKA, Yasuhiro, Kariya-city Aichi 448-8661 (JP); HARADA, Toshikazu, Kariya-city Aichi 448-8661 (JP); SAITOU, Keita, Kariya-city Aichi 448-8661 (JP); SAKAIDA, Atusi, Kariya-city Aichi 448-8661 (JP); TANIGUCHI, Toshihisa, Kariya-city Aichi 448-8661 (JP); GOUKO, Norio, Kariya-city Aichi 448-8661 (JP)
(74) Representative: Kuhnen & Wacker
(86) International application number: PCT/JP2014/063047
(87) International publication number: WO 2014/196337

(57) **Abstract**

A comfortable temperature control apparatus used for a vehicle is provided with a temperature-change element (20) that changes a temperature thereof by being energized; a heat flux sensor (10) outputting a sensor signal corresponding to a heat flux; a heat diffusion layer (40) disposed on the heat flux sensor (10); and a control unit (2) that energizes the temperature-change element so as to adjust the temperature of the temperature-change element (20). In a seat (200) provided in a vehicle cabin of a vehicle, a cover surface (201a) side in contact a passenger being seated, the heat diffusion layer, the heat flux sensor and the temperature-change element are arranged in this order. The heat flux sensor outputs the sensor signal to the control unit, the sensor signal corresponding to the heat flux between the cover surface and the temperature-change element. The control unit adjusts an energization of the temperature-change element, based on the sensor signal outputted by the heat flux sensor, such that the heat flux between the cover surface and the temperature-change element is a predetermined value.

## Description

### [Technical Field]

The present disclosure relates to comfortable temperature control apparatuses. In particular, the present disclosure relates to a comfortable temperature control apparatus using a heat flux sensor.

### [Background]

Conventionally, a seat heater disposed in a seat of a vehicle has been known. The seat heater warms a cover surface of the seat. For instance, JP-A-2008-67850 discloses a seat heater using a heating element in which the seat heater is energized to set the temperature of the cover surface to be a predetermined temperature.

### [Summary]

### [Technical Problem]

It has been known that a human body has a temperature sensitivity which is more influenced by a heat flux between the human body and a part contacting the human body, than the temperature of the part contacting the human body. Hence, according to an apparatus like the above-described seat heater in which temperature of the cover surface of the seat is maintained to be a predetermined temperature, a surface temperature of the passenger changes depending on time. Therefore, the heat flux between the cover surface of the seat and the passenger is changed, thereby possibly causing discomfort to the passenger. It should be noted that the heat flux is a quantity of heat transferred through a unit area per unit time.

In light of the above-described circumstances, the object of the present disclosure is to provide a comfortable temperature control apparatus capable of providing a comfortable temperature environment.

### [Solution to Problem]

To achieve the above-mentioned object, the comfortable temperature control apparatus according to the present disclosure is provided with a temperature-change element (20) that changes a temperature thereof by being energized; a heat flux sensor (10) provided on the temperature-change element, outputting a sensor signal corresponding to a heat flux; a heat diffusion layer (40) disposed at an opposite side of a portion contacting the temperature-change element in the heat flux sensor; and a control unit (2) that energizes the temperature-change element so as to adjust the temperature of the temperature-change element. The comfortable temperature control apparatus has the following features.

That is, in a seat (200) provided in a vehicle cabin of a vehicle, a cover surface (201a) side in contact with a passenger being seated, the heat diffusion layer, the heat flux sensor and the temperature-change element are arranged in this order. The heat flux sensor outputs the sensor signal corresponding to the heat flux between the cover surface and the temperature-change element and the control unit adjusts an energization of the temperature-change element, based on the sensor signal outputted by the heat flux sensor, such that the heat flux between the cover surface and the temperature-change element is a predetermined value.

According to these features, since the energization to the temperature-change element is adjusted such that the heat flux between the cover surface and the temperature-change element has a predetermined value, the heat flux between the cover surface and the passenger can have a constant value. Therefore, by setting the predetermined value to be a value corresponding to a heat flux where the human body feels comfortable, a comfortable temperature environment can be provided to the passenger.

It should be noted that the reference signs in the parenthesis of the respective means described in this section and claims represent the correspondence with the specific means described in the embodiment set forth below.

### [Brief Description of Drawings]

[Fig. 1] is a diagram showing a configuration of a comfort temperature control apparatus used for a vehicle according to a first embodiment of the present disclosure.
[Fig. 2] is a plan view showing a heat flux sensor as shown in Fig.1.
[Fig. 3] is a cross-sectional view sectioned along a line III-III as shown in Fig. 2.
[Fig. 4] is a cross-sectional view sectioned along a line IV-IV as shown in Fig. 2.
[Fig. 5] is a cross-sectional view showing a manufacturing process of the heat flux sensor.
[Fig. 6] is a schematic diagram in which a heater unit is provided in the seat.
[Fig. 7] is a flowchart showing an operation of a control unit.
[Fig. 8A] is a timing diagram when the panel heater is energized before the passenger is seated.
[Fig. 8B] is a timing diagram when the panel heater is energized after the passenger is seated.
[Fig. 9] is a schematic diagram showing an arrangement of a heater unit of a comfortable temperature control apparatus, according to a second embodiment.
[Fig. 10] is a schematic diagram showing a comfortable temperature control apparatus in which a heater unit is disposed, according to a third embodiment.
[Fig. 11] is a schematic diagram showing a comfortable temperature control apparatus in which a heater unit is disposed, according to a reference example.

### [Description of Embodiments]

Hereinafter, with reference to the drawings, some embodiments of the present disclosure will be described. In the following description of the embodiments, the portions identical or equivalent to each other between the embodiments are given the same reference signs.

### (First Embodiment)

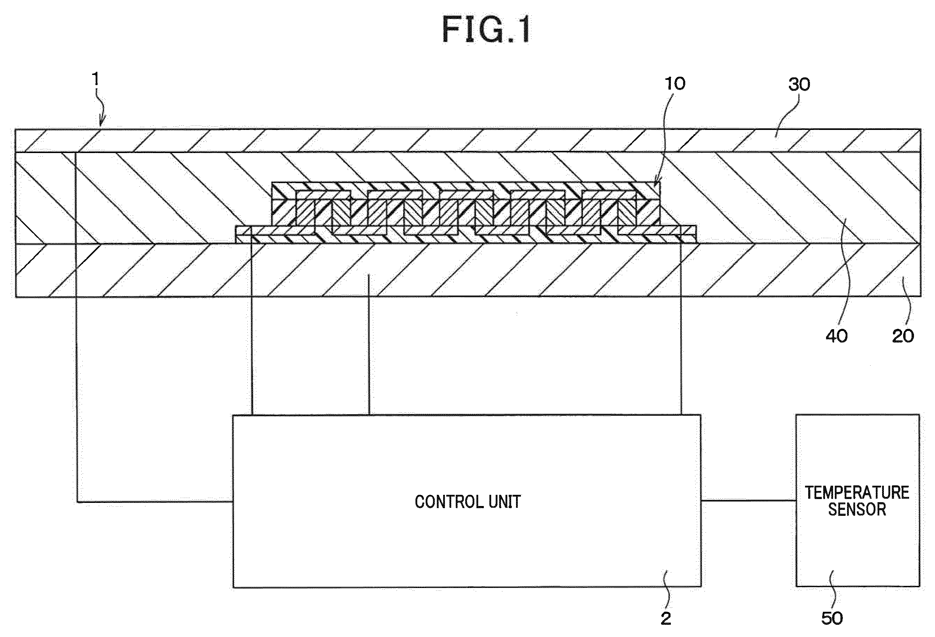

The first embodiment of the present disclosure will be described. As shown in Fig. 1, a comfortable temperature control apparatus used for a vehicle according to the present embodiment is provided with a heater 1 including a heat flux sensor 10, a panel heater 20, a cover 30 and an intermediate member 40, and also provided with a control unit 2 and a temperature sensor 50.

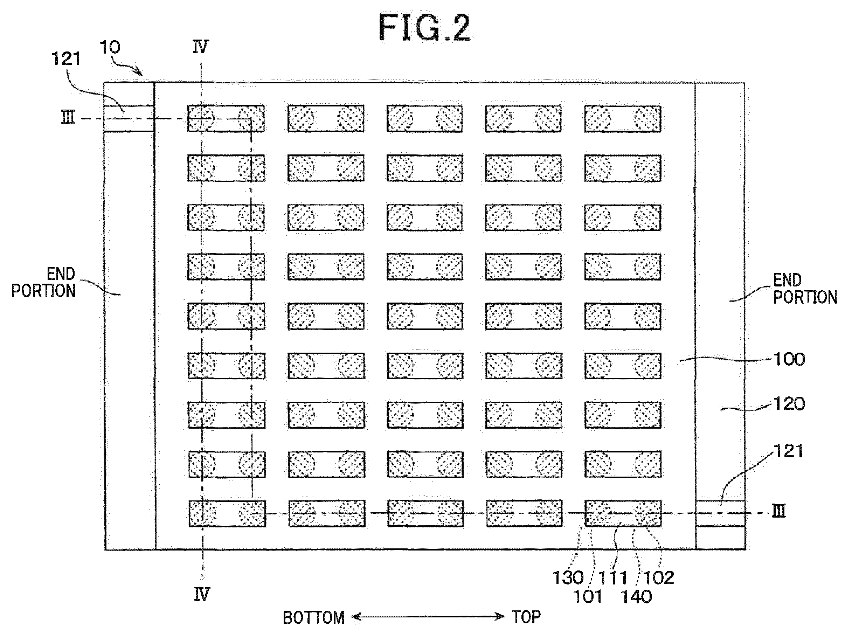

As shown Figs. 2 to 4, the heat flux sensor 10 is constituted of an insulation base material 100, a front surface protection member 110 and a back surface protection member 120 which are integrated with each other. The first and second interlayer connection members 130 and 140 are alternately connected in series in the integrated configuration. Hereinafter, the structure of the heat flux sensor 10 will be described in detail. In Fig. 2, for better understanding, the front surface protection member 110 is omitted.

According to the present embodiment, the insulation base material 100 is composed of a thermoplastic resin film of polyether ether ketone (PEEK), polyether imide (PEI) and liquid crystal polymer (LCP), having a plane-rectangular shape. The insulation base material 100 is formed in a zigzag pattern such that a plurality of first and second via holes 101 and 102 are alternately located, which penetrate through the base material in a thickness direction.

The first and second via holes 101 and 102 have a cylindrical shape having constant diameter from the front surface 100a to the back surface 100b. However, a taper shape may be used in which the diameter decreases towards the back surface 100b from the front surface 100a. Further, another taper shape may be used where the diameter decreases towards the front surface 100a from the back surface 100b or a rectangular cylindrical shape may be used.

The first interlayer connection member 130 is disposed in each of the first via holes101. The second interlayer connection member 140 is disposed in each of the second via holes 102. In other words, the first and second interlayer connection member 130 and 140 are arranged in the insulation base material 100 so as to be alternated.

The first and second interlayer connection members 130 and 140 are composed of mutually different metals so as to produce the Seebeck effect. For example, the first interlayer connection member 130 is composed of a metal composite (sintered alloy) in which a powder of Bi-Sb-Te alloy that constitutes a P-type material is solid-phase sintered while maintaining a crystal structure of a plurality of metal atoms before being sintered. Similarly, the second interlayer connection member 140 is composed of a metal composite (sintered alloy) in which Bi-Te alloy powder that constitutes an N-type material is solid-phase sintered so as to maintain a predetermined crystal structure of a plurality of metal atoms before being sintered. Thus, the metal composite is used as the first and second interlayer connection member 130 and 140, in which a solid-phase sintering is applied while maintaining a predetermined crystal structure, whereby an electromotive force thereof can be higher.

In Fig. 2, which is not a cross sectional view, the first and second interlayer connection members 130 and 140 are hatched for better understanding.

The front surface protection member 110 is arranged on the front surface 100a of the insulation base material 100. The front surface protection member 110 is composed of thermoplastic resin film having a plane-rectangular shape, such as polyether ether ketone (PEEK), polyether imide (PEI) or liquid crystal polymer (LCP). The front surface protection member 110 has a planar shape of which the dimensions are the same as those of the insulation base material 10. The surface protection member 110 is formed such that a plurality of front surface patterns 111 are located apart from each other, where a copper foil or the like is patterned at a surface 110a side facing the insulation base material 100. The front surface patterns 111 are electrically appropriately connected to the respective first and second interlayer connection members 130 and 140.

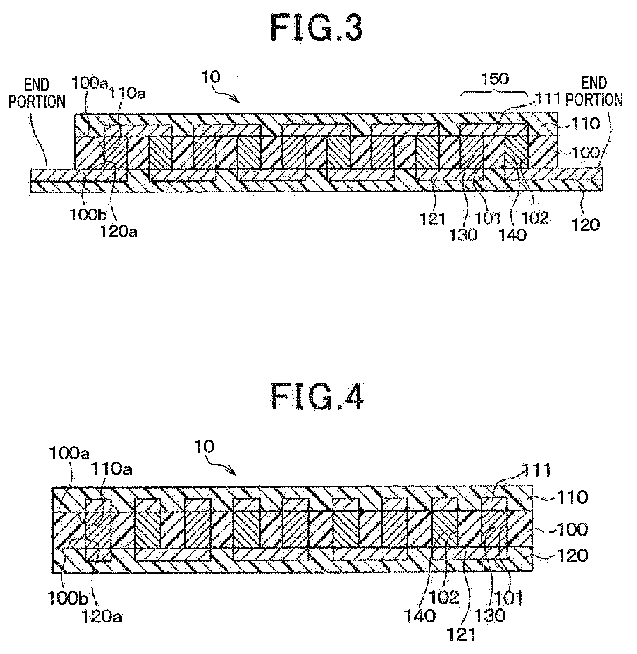

Specifically, as shown in Fig. 3, when pairing one adjacent first interlayer connection member 130 and one second interlayer connection member 140 to be a pair 150, the first and second interlayer connection members 130 and 140 of each of the pairs 150 are connected to the same front surface pattern 111. In other words, the first and second interlayer connection members 130 and 140 of each of the pairs 150 are electrically connected to each other via the front surface pattern 111. According to the present embodiment, one first interlayer connection member 130 and one second interlayer connection member 140 which are adjacent to each other in a longitudinal direction (left-right direction on the paper surface in Fig. 3) of the insulation base material 100 are determined as a pair 150.

On the back surface 100b of the insulation base material 100, the back surface protection member 120 is arranged. The back surface protection member 120 is composed of a thermoplastic resin film having a plane-rectangular shape, such as polyether ether ketone (PEEK), polyether imide (PEI) or liquid crystal polymer (LCP). The back surface protection member 120 has a length in the longitudinal direction of the insulation base material 100, the length being set to be longer than that of the insulation base material 100, and arranged on the back surface 100b of the insulation base material 100 such that both end portions in the longitudinal direction are protruded from the insulation base material 100.

In the back surface protection member 120, a plurality of back surface patterns 121 are formed at a surface 120a side facing the insulation base material 100, and are spaced apart from each other. The back surface patterns 121 are electrically connected to the respective first and second interlayer connection member 130 and 140.

Specifically, as shown in Fig. 3, in the pairs 150 adjacently located in the longitudinal direction of the insulation base material 100, the first insulation connection member 130 of one pair 150 and the second insulation connection member 140 of the other pair 150 are connected to the same single back surface pattern 121. In other words, the first and second interlayer connection member 130 and 140 are electrically connected across the pairs 150 via the same back surface pattern 121.

Also, as shown in Fig. 4, in the outer periphery of the insulation base material 100, the first connection member 130 and the second connection member 140 are connected to the same back surface pattern 121, where the first and second connection members are located adjacently along a direction perpendicular to the longitudinal direction (up-down direction as shown in Fig. 2). In more detail, adjacent first and second interlayer connection members 130 and 140 are connected to the same back surface pattern 121 such that the members which are serially-connected via the front surface pattern 111 and the back surface pattern 112 can be folded back.

In the back surface pattern 121, as shown in Fig. 2 and Fig. 3, the end portions of the serially-connected members as described above are formed to extend from the insulation base material 100. In the back surface pattern 121, portions exposed from the insulation base material 100 serves as a terminal to be connected to the control unit 2.

A configuration of a basic heat flux sensor 10 according to the present embodiment has been described so far. This type of heat flux sensor 10 outputs a sensor signal (electromotive force) responding to the heat flux transferred in the thickness direction of the heat flux sensor 10, to the control unit 2. This is because the electromotive force occurring at the first and second interlayer connection members 130 and 140 changes when the heat flux changes, the first and second interlayer connection members being serially connected alternately. The thickness direction of the heat flux sensor 10 is a direction where the insulation base material 100, the front surface protection member 110 and the back surface protection member 120 are laminated.

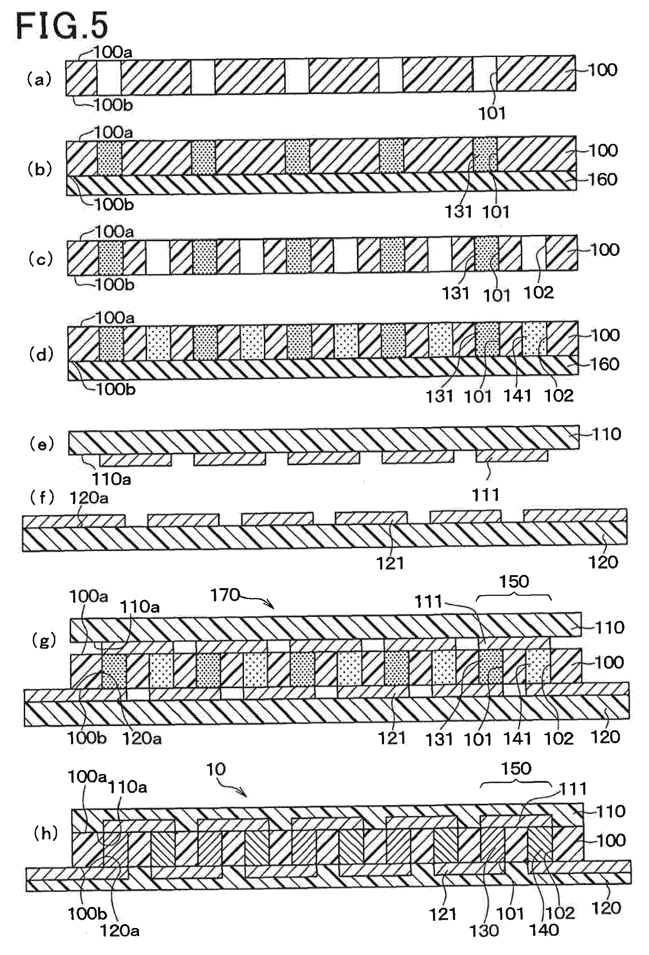

Here, with reference to Fig. 5, a manufacturing method of the above-described heat flux sensor 10 will be described.

First, as shown in Fig. 5 (a), an insulation member 100 is prepared and a plurality of first via holes 101 is formed using a drill or a laser or the like.

Next, as shown in Fig. 5 (b), a first conductive paste 131 is filled into the first via holes 101. As a method (apparatus) for filling the first conductive paste into the first via holes 101, a method disclosed in the Japanese Patent Application No. 2010-50356 filed by the present applicant can be adopted.

Explaining briefly, the insulation base material 100 is disposed on a holder (not shown) via an absorbent sheet 160 such that the back surface 100b faces the absorbent sheet 160. Then, the first via holes 101 are filled with the first conductive paste 131 while being melted. Thus, most of organic solvent in the first conductive paste 131 is absorbed by the absorbent sheet 160 and alloy powder is disposed densely in the first via holes 101.

The absorbent sheet 160 may only have to be a material capable of absorbing the organic solvent of the first conductive paste 131 and thus general fine quality paper is used. For the first conductive paste 131, a paste produced from Bi-Sb-Te alloy powder where a prescribed crystal structure is maintained in the metal atoms is used. The paste is produced by adding an organic solvent such as paraffin, having a melting point of 43 °C, to the Bi-Sb-Te alloy powder. Hence, when using the first conductive paste 131 to fill the first via holes 101, the front surface 100a of the insulation base material 100 is heated to approximately 43 °C.

Subsequently, as shown in Fig. 5(c), a plurality of second via holes 102 are formed in the insulation base material 100 using a drill or a laser or the like. As described above, the second via holes 102 are formed in a zigzag pattern in combination with the first via holes 101 such that the first via holes 101 and the second via holes 102 are alternately located.

Next, as shown in Fig. 5 (d), the second via holes 102 are filled with the second conductive paste 141. This manufacturing process can be performed with similar manufacturing process to the above-described Fig. 5 (b).

Specifically, again, the insulation base material 100 is disposed on the holder (not shown) via the absorbent sheet 160 such that the back surface 100b faces the absorbent sheet 160 and then, the second conductive paste 141 is filled in the second via holes 102. Thus, most of organic solvent in the second conductive paste 141 is absorbed by the absorbent sheet 160 and alloy powder is disposed closely to the second via holes 102.

For the second conductive paste 141, a paste of a Bi-Te alloy powder is used. The paste of the Bi-Te alloy powder is produced by adding an organic solvent such as terpene having a melting point at room temperature to the Bi-Te alloy powder where metal atoms different from metal atoms composed of the first conductive paste 131 maintain a prescribed crystal structure. In other words, for the organic solvent that constitutes the second conductive paste 141, an organic solvent having melting point lower than the organic solvent that constitutes the first conductive paste 131 is used. When using the second conductive paste 141 to fill the via holes, the front surface 100a of the insulation base material 100 is kept at room temperature. In other words, the second conductive paste 141 is filled into the via holes while an organic solvent contained in the first conductive paste is still solid. As a result, mixing of the second conductive paste 141 with the first conductive paste within the first via holes 101 can be minimized.

The state where the organic solvent contained in the first conductive paste 131 is solidified refers to a state where an organic solvent remains in the first via holes 101 without being absorbed by the absorbent sheet 160 during the manufacturing process described above as shown in Fig. 5 (b).

Subsequently, in other manufacturing processes than the above-described respective processes, as shown in Fig. 5 (e) and Fig. 5(f), a copper foil or the like is formed on each of the surfaces 110a and 120a facing the insulation base material 100, of the front surface protection member 110 and the back surface protection member 120. The copper foil is appropriately patterned so as to prepare the front surface protection member 110 on which the plurality of front surface pattern 111 are formed being spaced apart from each other and the back surface protection member 120 on which the plurality of back surface pattern 121 are formed being apart from each other.

Then, as shown in Fig. 5 (g), the back surface protection member 120, the insulation base material 100 and the front surface protection member 110 are laminated in this order so as to constitute the laminate 170.

According to the present embodiment, the length in the longitudinal direction of the back surface protection member 120 is set to be longer than that of the insulation base material 100. The back surface protection member 120 is provided such that the both ends in the longitudinal direction are protruded from the insulation base material 100.

Subsequently, as shown in Fig. 5 (h), the laminate 170 is placed between a pair of press plates (not shown in the figure) and pressure is applied in a vacuum state from above and below in the lamination direction, while being heated, thereby integrating the laminate 170. Specifically, the first and second conductive pastes 131 and 141 are solid-phase sintered so as to form the first and second interlayer connection members 130 and 140, and pressure is applied to the laminate while being heated so as to connect the first and second interlayer connection members 130 and 140 to the front surface pattern 111 and the back surface pattern 121, thereby integrating the laminate 170.

Although not particularly limited, a cushioning material such as rock wool paper or the like may be disposed between the laminate 170 and each of the press plates, when integrating the laminate 170. Thus, the above-described heat flux sensor 10 is produced.

The panel heater 20 has the heat flux sensor 10 disposed therein as shown Fig. 1. For example, a publicly known device is used, in which nichrome wires arranged forming a polygonal line are accommodated in a protection cover. The panel heater 20 is energized by the control unit 2 to generate heat, thereby increasing temperature thereof. According to the present embodiment, the panel heater 20 corresponds to a temperature-change element of the present disclosure and the outer shape of the panel heater 20 has a plane-rectangular shape.

The intermediate member 40 diffuses and transfers heat of the panel heater 20. The intermediate member 40 is disposed to cover a portion differing from a potion contacting the panel heater 20 in the heat flux sensor 10. Specifically, in the heat flux sensor 10, since the surface opposite to the surface 120a of the back surface protection member 120 contacts the panel heater 20, the intermediate member 40 is disposed to cover the portion excluding this surface in the heat flux sensor 10. In other words, the intermediate member 40 is disposed to cover a portion opposite to the panel heater 20 side of the heat flux sensor 10 and a portion connecting this portion to a portion contacting the panel heater 20. According to the present embodiment, the intermediate member 40 corresponds to a heat diffusion layer, and is constituted of stainless steel, a resin, or the like having high diffusibility.

The cover 30 is disposed on the intermediate member 40, and also the cover 30 according to the present embodiment is also constituted of a stainless steel, a resin, or the like having high diffusibility. The cover 30 may not be necessarily provided.

The temperature sensor 50 is configured to measure an ambient temperature of the heat flux sensor 10 and outputs a measurement value to the control unit 2. For the temperature sensor, a thermistor or the like is used.

The control unit 2 is a vehicle ECU or the like, including CPU, various memory devices that compose memory means, and peripheral equipment or the like. The control unit 2 is connected to the heat flux sensor 10, the panel heater 20 and the temperature sensor 50 or the like. The control unit 2 starts to energize the panel heater 20 based on the measurement value of the temperature sensor 50 and adjusts power to the panel heater 20 based on the sensor signal outputted by the heat flux sensor 10.

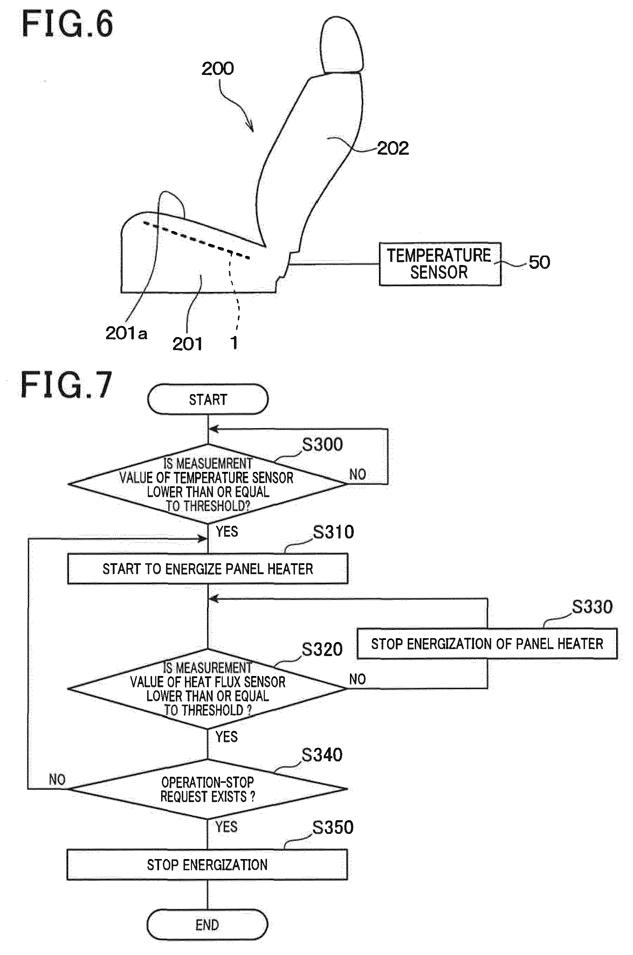

The structure of the comfortable temperature control apparatus for vehicle according to the present embodiment has been described above. This type of comfortable temperature control apparatus for vehicle is, for example, mounted in a cabin of a vehicle (four wheel vehicle) as shown in Fig. 6 and is used in a seat 200 having a seat surface portion (seat cushion) 201 and a backrest portion (seat back) 200. In the seat 200, the heater 1 is disposed in the seat surface portion 201 and the temperature sensor 50 measures temperature around the seat 200.

The heater 1 is disposed such that, from a cover surface 201a side in contact with a passenger being seated, the cover 30, the intermediate member 40, the heat flux sensor 10 and the panel heater 20 are arranged in this order. Measuring the temperature around the seat by the temperature sensor 50 refers to detecting temperature in the vehicle cabin on the opposite side of the panel heater 20 being intervened by the cover surface 201a.

Hereinafter, with reference to Fig. 7, an operation of the control unit 2 in the above-described vehicle-use comfortable temperature control apparatus will be described. It should be noted that, for example, the control unit 2 starts the following procedure, when the ignition key of the vehicle is turned ON.

First, the control unit 2 determines whether or not the measurement value detected by the temperature sensor 50 is lower than or equal to a threshold (S300). When the measurement value detected by the temperature sensor 50 is determined as lower than or equal to the threshold (S300: YES), the control unit 2 starts to energize the panel heater 20 to make the panel heater 20 generate heat and the cover surface 201a of the seat surface portion 201 is warmed by radiant heat from the cover 30 (intermediate member 40) at step S310. It should be noted that a region in which the temperature is higher than the threshold corresponds to a predetermined range of the present disclosure.

According to the present embodiment, the cover 30 and the intermediate member 40 are made of a material having high diffusibility of heat so that an amount of heat transfer from the cover 30 to the cover surface 201a in individual sections is about the same. Accordingly, the temperature of the cover surface 201a can be prevented from being varied depending on the individual sections.

Further, when the control unit 2 determines that the measurement value detected by the temperature sensor 50 is higher than the threshold (S300: NO), the control unit 2 again performs magnitude comparison between the measurement value detected by the temperature sensor 50 and the threshold. This is because the passenger is unlikely to feel discomfort without the cover surface 201a of the seat 200 being warmed, when the temperature in the vehicle cabin is sufficiently high.

According to the present embodiment, when the measurement value detected by the temperature sensor 50 is determined to be higher than the threshold (S300: NO) but when the passenger requests to start the operation, the control unit 2 starts to energize the panel heater 20 (S310). For example, the passenger can request to start the operation through a touch panel provided on the dashboard.

The heat flux sensor 10 and the panel heater 20 are arranged in this order from the cover surface 201a side. The heat flux sensor 10 measures a heat flux between the panel heater 20 and the cover surface 201a. Accordingly, the process determines whether or not the measurement value of the heat flux sensor 10 is lower than or equal to the threshold (S320). Then, when the measurement value is higher than or equal to the threshold (S320: NO), the control unit 2 stops energizing the panel heater 20 (S330) and again determines whether or not the measurement value is lower than or equal to the threshold.

The threshold is defined in advance as a value corresponding to the heat flux with which a human body (passenger) feels comfortable. However, also, the passenger can change the threshold value. When determining the measurement value of the heat flux sensor 10 in the procedure of step S320, the sensor signal (electromotive force) outputted from the heat flux sensor 10 may be directly used for the determination. Alternatively, the sensor signal may be converted to a heat flux so as to determine the heat flux.

When the measurement value of the heat flux sensor 10 is lower than or equal to the threshold (S320: YES), the control unit determines whether or not an operation-stop request has been made (S340). Then, when the operation-stop request exists (S340: YES), energization to the panel heater 20 is stopped and the procedure terminates (S350). On the other hand, when the operation-stop request is not present (S340: NO), the control unit 2 energizes the panel heater 20. In this case, when the panel heater is being energized already, the panel heater 20 is kept energized, and when the panel heater 20 is not energized (procedure of step S330 has been performed), the control unit 2 starts to energize the panel heater 20.

To determine whether or not the operation-stop request exists (S350), for example, the process determines whether or not the passenger has operated the touch panel provided in the dashboard to stop the operation.

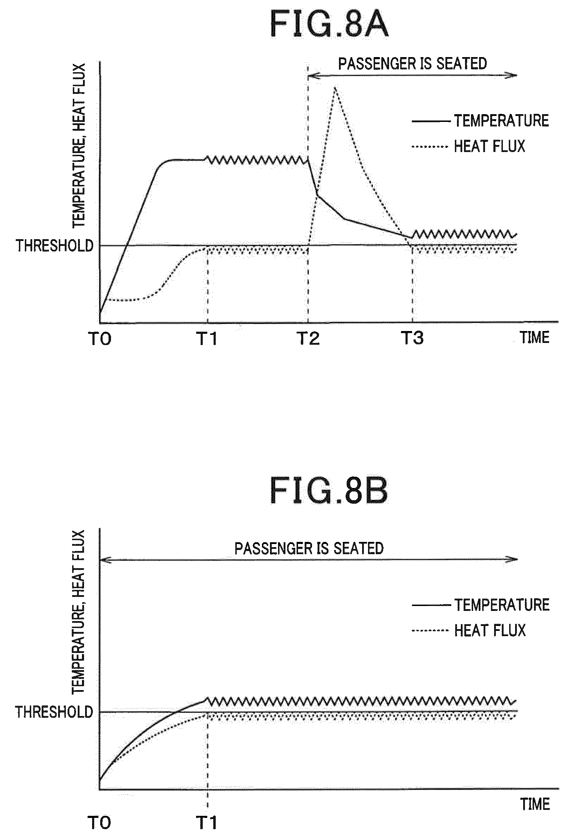

The operation of the control unit 2 has been described above. Next, with reference to Fig. 7, Figs. 8A and 8B, a relationship between actual temperature of the cover surface 201a and the heat flux will be described. The temperature of the cover surface 201a as shown in Fig. 8A and Fig. 8B is not a temperature measured by the temperature sensor 50, but a temperature measured by another temperature sensor that measures the cover surface 201.

First, a case is described where the passenger is seated after the panel heater 20 has been energized. As shown in Fig. 8A, when the panel heater 20 is energized at a time T0, the front surface 201a is warmed by heat radiation from the panel heater 20 to increase the temperature of the cover surface 201a. Then, at a time T1, when the heat flux between panel heater 20 and the cover surface 201a (cover 30) reaches a predetermined threshold, the panel heater 20 is repeatedly energized and stopped so as to maintain the heat flux between the panel heater 20 and the cover surface 201a to be substantially constant at a predetermined value (predetermined threshold).

In other words, when determining the measurement value at the process of the step S320 as shown in Fig. 7 to be higher than the threshold, energization to the panel heater 20 is stopped at step S330. Then, the process again determines, at step S320, whether or not the measurement value is lower than or equal to the threshold. When the process determines that the measurement value is lower than or equal to the threshold and there is not an operation-stop request at the process of step S340, the panel heater 20 is energized in the process of step S310. Therefore, as shown in Fig. 8A, during a period from the time T1 where the heat flux is at a predetermined threshold to a time T2 where the passenger is seated, the heat flux between the panel heater 20 and the cover surface 201a is maintained to be substantially constant at a predetermined value (predetermined threshold).

Then, when the passenger is seated at a time T2, heat is transferred from the cover surface 201a to the passenger and the heat flux increases exceeding the threshold. Hence, the control unit 2 stops energizing the panel heater 20. Thereafter, when the heat flux decreases to be lower than the threshold at a time T3, similar to a period from the time T1 to the time T2, the panel heater 20 is repeatedly energized and stopped so as to maintain the heat flux between the panel heater 20 and the cover surface 201a to be substantially constant at a predetermined value (predetermined threshold). It should be noted that an amount of heat flux is substantially the same in a period from the time T1 to the time T2 and after the time T3, however, since the passenger is seated, the temperature of the cover surface 201a after the time T3 is lower than that in the period from the time T1 to the time T2.

In other words, when the passenger is seated, a large heat flux is generated. Hence, during a period from the time T2 where the passenger is seated to the time T3 where the heat flux becomes the predetermined threshold, the process determines, at a process of step S320, that the measurement value is higher than the threshold. Accordingly, in this period, the processes of steps S320 and S330 are repeatedly executed so that energization of the panel heater 20 is stopped, whereby the temperature of the front skin 201a is gradually decreased while the heat flux is drastically increased and then gradually decreased.

Subsequently, at the time T3, when the heat flux decreases to be lower than or equal to the threshold, similar to the period from the time T1 to the time T2, the process determines, at the process of step S320, that the measurement value is lower than or equal to the threshold. When the process determines, at the process of step S340, that an operation-stop request is not present, the panel heater 20 is energized at the process of step S310. Also, when determining the heat flux is higher than or equal to the predetermined value at the process of step S320, the process stops energization of the panel heater 20 at the process of step S330. Therefore, as shown in Fig. 8A, after the time T3 where the heat flux decreases to be lower than or equal to the predetermined threshold after the passenger is seated, the heat flux between the panel heater 20 and the cover surface 201 is maintained to be substantially constant at a predetermined value (predetermined threshold).

Subsequently, a case is described where the panel heater 20 is energized after the passenger is seated. As shown in Fig. 8B, when the panel heater 20 is energized at the time T0, the cover surface 201a is warmed by heat radiation from the panel heater 20 so that the temperature of the cover surface 201a becomes higher. Then, at the time T1, when the heat flux between the panel heater 20 and the cover surface 201a (cover 30) reaches a predetermined threshold, the panel heater 20 is repeatedly energized and stopped so as to maintain the heat flux between the panel heater 20 and the cover surface 201a to be substantially constant at a predetermined value (predetermined threshold).

In other words, in this case, the panel heater 20 is energized after the passenger is seated so that the heat flux is gradually increased. Then at the time T1, when the process determines that the measurement value is higher than the threshold at the process of step S320, the energization to the panel heater 20 is stopped at the process of step S330. Then, the process again determines whether or not the measurement value is lower than or equal to the threshold at the process of step S320. When the process determines that the measurement value is lower than or equal to the threshold and determines, at the process of step S340, that an operation-stop request is not present, the panel heater 20 is energized at the process of step S310. As a result, as shown in Fig. 8B, after the time T1, the heat flux between the panel heater 20 and the cover surface 201a is maintained to be substantially constant at a predetermined value (predetermined threshold).

In this case, since the panel heater 20 is energized after the passenger is seated, the heat flux is not significantly changed after the time T1. However, when the passenger changes their posture, thereby causing the heat flux to be higher, processes similar to those from the time T2 to the time T3 as shown in Fig. 8 are performed.

As described above, according to the present embodiment, the cover 30, the intermediate member 40, the heat flux sensor 10 and the panel heater 20 are arranged in this order from a cover surface 201a side in contact with the passenger on the seat 200, while being seated. The control unit 2 controls the energization of the panel heater 20 based on the sensor signal outputted from the heat flux sensor 10 such that the heat flux between the panel heater 20 and the cover surface 201a is maintained at the predetermined value. Thus, the heat flux between the passenger and the cover surface 201a can be maintained at a value where the passenger feels comfortable. As a result, a comfortable temperature environment can be provided to the passenger.

The cover 30 and the intermediate member 40 are composed of stainless steel, a resin, or the like having high thermal conductivity. Therefore, the temperature of the cover surface 201a can be prevented from being varied depending on the sections.

Moreover, according to the present embodiment, the first and second via holes 101 and 102 are formed on the insulation base material 100 made of a thermoplastic resin, and the first and second interlayer connection members 130 and 140 are arranged in the first and second via holes 101 and 102, respectively, so as to constitute the heat flux sensor 10. Accordingly, the number of first and second via holes, the diameter and the intervals thereof can be appropriately changed, whereby the first and second interlayer connection member 130 and 140 can be densified. Thus, electromotive force thereof can be made higher and the sensitivity of the heat flux sensor 10 can be made higher.

The heat flux sensor 10 according to the present embodiment uses a metal composite (Bi-Sb-Te alloy, Bi-Te alloy) as the first and second interlayer connection members 130 and 140, in which solid-phase sintering is applied to maintain the same crystal structure as before sintered. In other words, the metal forming the first and second interlayer connection members 130 and 140 is a sintered alloy in which a plurality of metal atoms are sintered with the crystal structure of the metal atoms being maintained. As a result, compared to a sintered alloy where the metal forming the first and second interlayer connection members 130 and 140 is liquid-phase sintered, the electromotive force thereof can be higher and the sensitivity of the heat flux sensor 10 can be higher.

According to the above-description, as a temperature-change element, the panel heater 20 is exemplified. However, as a temperature-change element, a Peltier device may be used to control the temperature at the heat flux sensor 10 side surface to be higher or lower, by changing the energization direction. In this case, the process of the above-described step S300 determines whether or not the measurement value detected by the temperature sensor 50 is within a predetermined range defined by the upper limit value and the lower limit value. Then, when the measurement value detected by the temperature sensor 50 is higher than or equal to the upper limit value, the temperature-change element is energized to make the temperature thereof lower so as to cool the cover surface 201a of the seat surface portion 201 by absorbing heat from the cover 30. On the other hand, when the measurement value detected by the temperature sensor 50 is lower than or equal to the lower limit value, the temperature-change element is energized to make the temperature-change element generate heat, thereby warming the cover 30. Subsequently, similar to the above, the control unit 2 controls the energization of the temperature-change element such that the heat flux between the temperature-change element and the cover surface 201a is maintained at a predetermined value.

As a temperature-change element, an element where the temperature is decreased when being energized may be used. In this case, the process of the above-mentioned step S300 determines whether or not the measurement value detected by the temperature sensor 50 is higher than or equal to the threshold. Then, when the measurement value detected by the temperature sensor 50 is higher than or equal to the threshold, the temperature-change element is energized to make the temperature of the temperature-change element lower so as to cool the cover surface 201a of the seat surface portion 201 by absorbing heat from the cover 30. In this case, a region having a temperature lower than the threshold corresponds to a predetermined range of the present disclosure.

Further, the above-described processes have been described by way of an example where the heater 1 is provided in the seat surface portion 201. In the example, the insulation base material 100, the surface protection member 110 and the back surface protection member 120 which constitute the heat flux sensor 10 are made of a thermoplastic resin having flexibility. Accordingly, the heater 1 may be arranged along the seat surface portion 201 and the backrest portion 202. Also, another heater 1 may be arranged in the seat surface portion 201 and the backrest portion 202.

For example, the heater 1 may also be provided in a steering wheel used by a passenger to operate the vehicle. Furthermore, the above description has been provided by way of an example where the present disclosure is adapted for a vehicle (four wheel vehicle). However, the present disclosure may be adapted for a two-wheel vehicle, in which the heater 1 is provided in a seat surface portion or a grip of the two-wheel vehicle.

### (Second Embodiment)

The second embodiment of the present disclosure will be described. In the apparatus of the above-described first embodiment, the temperature of the cover surface 201a of the seat surface portion 201 is adjusted (adjusting heat flux). However, the comfortable temperature control apparatus can be adapted for an apparatus that adjusts the temperature inside the vehicle cabin.

Specifically, the second embodiment relates to a comfortable temperature control apparatus for a vehicle characterized by including: a temperature-change element that changes the temperature thereof by being energized; a heat flux sensor provided on the temperature-change element, outputting a sensor signal corresponding to the heat flux; a heat diffusion layer disposed at an opposite side of a portion contacting the temperature-change element in the heat flux sensor; and a control unit that energizes the temperature-change element so as to adjust the temperature of the temperature-change element, wherein in a space defined between an upholstery disposed inside a vehicle cabin and a panel disposed at an outer-side of the vehicle cabin, an upholstery side, the heat diffusion layer, the heat flux sensor and the heat change element are arranged in this order, the upholstery forming a contour inside the vehicle cabin and the panel forming a contour of the vehicle; the heat flux sensor outputs the sensor signal corresponding to the heat flux between the temperature-change element and a space inside the vehicle cabin; and the control unit adjusts an energization of the temperature-change element, based on the sensor signal outputted by the heat flux sensor, such that the heat flux between the temperature-change element and the space inside the vehicle cabin has a predetermined value.

Specifically, similar to the first embodiment, the panel heater 20 or the like is used for the temperature-change element. As shown in Figs. 2 to 4, similar to the first embodiment, in the heat flux sensor 10, the insulation base material 100, the surface protection member 110, the back surface protection member 120 are integrated, in which the first interlayer connection member 130 and the second interlayer connection member 140 are serially and alternately connected. Similar to the first embodiment, the heat flux sensor 10, the panel heater 20, the cover 30 and the intermediate member (heat diffusion layer) 40 constitute the heater 1. Also, similar to the first embodiment, the control unit 2 is constituted of CPU, various memory devices that constitute memory means, a vehicle ECU composed of peripheral devices or the like.

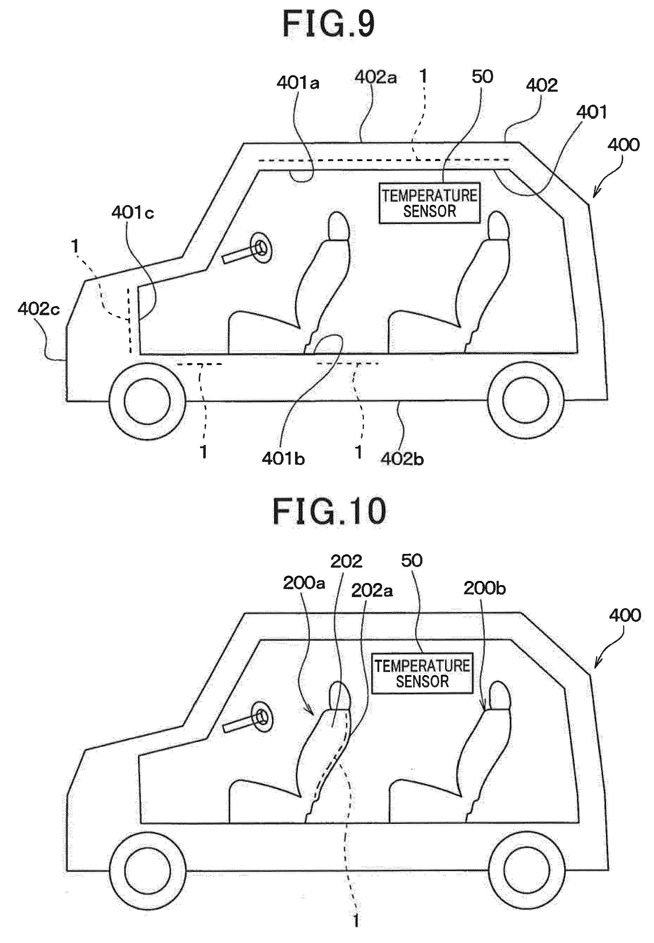

Then, as shown in Fig. 9, in the comfortable temperature control apparatus according to the present embodiment, the heater 1 is disposed in a space defined by an upholstery 401 disposed inside a vehicle cabin of a vehicle 400, forming a contour inside the vehicle cabin and a panel 402 disposed at outer-side of the vehicle cabin, forming a contour of the vehicle 400. Specifically, the cover 30, the intermediate member 40, the heat flux sensor 10 and the panel heater 20 are arranged in this order from an upholstery 401 side disposed inside the vehicle cabin.

According to the present embodiment, the heater 1 is disposed between an upholstery 401a that constitutes the ceiling of the vehicle cabin and a panel 402a facing the upholstery 401a, between an upholstery 401b that constitutes the floor surface of the vehicle cabin and a panel 402b facing the upholstery 401b and between an upholstery 401c disposed near the feet of the passenger and a panel 402c facing the upholstery 401c. According to the present embodiment, the temperature of the vehicle cabin is measured by the temperature sensor 50.

Next, an operation of the control unit 2 according to the present embodiment will be described. Since the operation of the control unit 2 is similar to the one shown in Fig.7, only different portions will be described. The control unit 2 starts the operation of Fig.7, for example, when the ignition switch of the vehicle 400 is turned ON.

That is, in the process of step S300, the control unit 2 determines whether or not the measurement value (temperature of vehicle cabin) detected by the temperature sensor 50 is lower than or equal to the threshold. When the process determines that the measurement value detected by the temperature sensor 50 is lower than or equal to the threshold (S300: YES), the control unit 2 starts to energize the panel heater 20 to make the panel heater 20 generate heat, thereby warming the upholstery 401 with radiant heat emitted from the cover 30 (S310).

Next, since the heat flux sensor 10 measures the heat flux between the panel heater 20 and the upholstery 401, the process determines whether or not the measurement value of the heat flux sensor 10 is lower than or equal to the threshold (S320).

Then, similar to the above-described first embodiment, processes of other steps S330 to S350 are executed.

The threshold in the process of step S320 is set in advance to be a value corresponding to the heat flux where the human body (passenger) feels comfortable. However, the passenger is able to change the threshold value.

As described, according to the present embodiment, energization of the panel heater 20 is controlled based on the sensor signal outputted by the heat flux sensor 10 such that the heat flux between the panel heater 20 and the upholstery 401 is maintained at a predetermined value. As a result, a comfortable temperature environment can be provided to the passenger.

In the present embodiment as well, similar to the above-described first embodiment, the temperature-change element may be served by a Peltier device or an element where the temperature is decreased when being energized. The cover 30 may not necessarily be provided. Further, the location of the heater 1 (heat flux sensor 10, intermediate member 40 and panel heater 20) can be changed as appropriate. Although the example described above includes the temperature sensor 50, the temperature sensor 50 may not be provided. In this case, the panel heater 30 may be energized when the operation start requested by a passenger.

### (Third Embodiment)

The present embodiment is a modification example of the second embodiment.

Specifically, the second embodiment relates to a comfortable temperature control apparatus for a vehicle characterized by including: a temperature-change element that changes the temperature thereof by being energized; a heat flux sensor provided on the temperature-change element, outputting a sensor signal corresponding to the heat flux; a heat diffusion layer disposed at an opposite side of a portion contacting the temperature-change element in the heat flux sensor; and a control unit that energizes the temperature-change element so as to adjust the temperature of the temperature-change element, wherein in a backrest portion of a front seat disposed in the vehicle cabin, the heat diffusion layer, the heat flux sensor and the heat change element are arranged in this order from a cover surface side of a back seat side; the heat flux sensor outputs the sensor signal corresponding to the heat flux between the temperature-change element and the cover surface; and the control unit adjusts an energization of the temperature-change element, based on the sensor signal outputted by the heat flux sensor, such that the heat flux between the cover surface and the temperature-change element has a predetermined value.

Specifically, the heater 1 and the control unit 2 have a configuration similar to that of the second embodiment. As shown in Fig. 10, the heater 1 is provided in the backrest portion 202 of the front seat (driver's seat and passenger seat) 200a in the vehicle 400 such that the cover 30, the intermediate member 40, the heat flux sensor 10 and the temperature-change element (panel heater) 20 are arranged in this order from the cover surface 202a side of the back seat 200b side.

The control unit 2 performs an operation similar to that of the above-described second embodiment. According to this, especially, a comfortable temperature environment can be provided to the passenger seated on the back seat 200b.

### (Other Embodiment)

The present disclosure is not limited to the above-described embodiments. However, various modifications can be made without departing from the scope of claims.

For example, in the above-described first embodiment, a size of the heat flux sensor 10 and a size panel heater 20 may be the same. In this case, the intermediate member 40 is arranged in a portion opposite to the panel heater 20 in the heat flux sensor 10.

In the above-described first embodiment, the heat flux sensor 10 may not be configured by the insulation base material 100 having the first and second via holes 101 and 102 which are provided with the first and second interlayer connection members 130 and 140, respectively. In other words, for example, the heat flux sensor may be configured by forming a thin film on a surface of a substrate.

Further, in the above-described first embodiment, a temperature sensor that detects temperature of the cover surface 201a may be provided so as to indicate the temperature of the cover surface 201a.

In the above-described first embodiment, the temperature sensor 50 may not be provided. In this case, for example, the panel heater may be energized when the operation start request from the passenger exists.

### (Reference Example)

In the reference example, an example is described in which a comfortable temperature control apparatus according to the present disclosure is applied to objects other than vehicles.

The reference example relates to a comfortable temperature control apparatus for bedclothes characterized by including: a temperature-change element that changes the temperature thereof by being energized; a heat flux sensor provided on the temperature-change element, outputting a sensor signal corresponding to the heat flux; a heat diffusion layer disposed at an opposite side of a portion contacting the temperature-change element in the heat flux sensor; and a control unit that energizes the temperature-change element so as to adjust the temperature of the temperature-change element, wherein in a space inside a bed where a human body lies, the heat diffusion layer, the heat flux sensor and the heat change element are arranged in the order from a cover surface side of the bed where the human body lies to contact therewith; the heat flux sensor outputs the sensor signal corresponding to the heat flux between the temperature-change element and the cover surface; and the control unit adjusts an energization of the temperature-change element, based on the sensor signal outputted by the heat flux sensor, such that the heat flux between the cover surface and the temperature-change element has a predetermined value.

Specifically, similar to the above-described first embodiment, the panel heater 20 or the like is used for the temperature-change element. As shown in Figs. 2 to 4, similar to the first embodiment, in the heat flux sensor 10, the insulation base material 100, the surface protection member 110, the back surface protection member 120 are integrated, in which the first interlayer connection member 130 and the second interlayer connection member 140 are serially and alternately connected. Similarly to the first embodiment, the heat flux sensor 10, the panel heater 20, the cover 30 and the intermediate member (heat diffusion layer) 40 constitute the heater 1. Also, similar to the above-described first embodiment, the control unit 2 is constituted of CPU, various memory devices that constitute memory means, peripheral devices or the like.

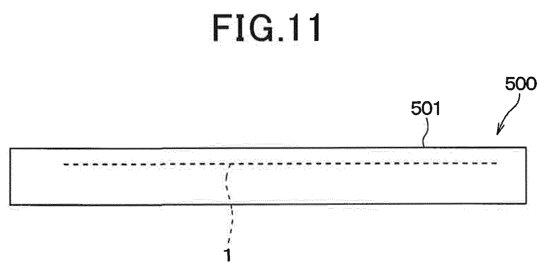

As shown in Fig. 11, in the comfortable temperature control apparatus according to the reference example, the heater 1 is disposed in a space inside the bed 500 where the human body lies. Specifically, the heater 1 is provided such that the cover 30, the intermediate member 40, the heat flux sensor 10 and the panel heater 20 are arranged in this order from the cover surface 501 side of the bed 500 where the human body lies to contact therewith.

Next, an operation of the control unit 2 according to the reference example will be described. Since the operation of the control unit 2 is similar to the one shown in Fig.7, only different portions will be described. The control unit 2 starts the operation, for example, when the user operates the start switch connected to the control unit 2.

Specifically, according to the reference example, since the processes are started when the user operates the start switch, the process of step S300 is not executed. When the user operates the start switch, the panel heater 20 is energized to generate heat therefrom, so as to warm the cover surface 501 by radiant heat emitted from the cover 30.

Next, since the heat flux between the panel heater 20 and the cover surface 501 is measured by the heat flux sensor, the process determines whether or not the measurement value of the heat flux sensor 10 is lower than or equal to the threshold (S320).

Then, similar to the above-described first embodiment, processes of other steps S330 to S350 are executed.

The threshold in the process of step S320 is set in advance to be a value corresponding to the heat flux where the human body (passenger) feels comfortable. However, the passenger is able to change the threshold value.

As described, according to the reference example, energization of the panel heater 20 is controlled based on the sensor signal outputted by the heat flux sensor 10 such that the heat flux between the panel heater 20 and the cover surface 501 is maintained at a predetermined value. As a result, a comfortable temperature environment can be provided to the user of the bed 500.

In the reference example as well, similar to the above-described first embodiment, the temperature-change element may be served by a Peltier device or an element where the temperature is decreased when being energized. The cover 30 may not be necessarily provided.

### [Reference Signs List]

2: control unit
10: heat flux sensor
100: insulation base material
101: first via hole
102: second via hole
130: first interlayer connection member
140: second interlayer connection member
200: seat
201a: cover surface

## Claims

1. A comfortable temperature control apparatus used for a vehicle **characterized in that** the apparatus comprises:
a temperature-change element (20) that changes a temperature thereof by being energized;
a heat flux sensor (10) provided on the temperature-change element, outputting a sensor signal corresponding to a heat flux;
a heat diffusion layer (40) disposed at an opposite side of a portion contacting the temperature-change element in the heat flux sensor; and
a control unit (2) that energizes the temperature-change element so as to adjust the temperature of the temperature-change element,
wherein
in a seat (200) provided in a vehicle cabin, a cover surface (201a) side in contact with a passenger being seated, the heat diffusion layer, the heat flux sensor and the temperature-change element are arranged in this order;
the heat flux sensor outputs the sensor signal corresponding to the heat flux between the cover surface and the temperature-change element; and
the control unit adjusts an energization of the temperature-change element, based on the sensor signal outputted by the heat flux sensor, such that the heat flux between the cover surface and the temperature-change element is a predetermined value.

2. The comfortable temperature control apparatus used for the vehicle according to claim 1, **characterized in that** the control unit starts to energize the temperature-change element when a measurement value measured by the temperature sensor is out of a predetermined range.

3. The comfortable temperature control apparatus used for the vehicle according to either claim 1 or 2, **characterized in that** the predetermined value is used as a threshold and the control unit stops energization of the temperature-change element when the heat flux between the cover surface and the temperature-change element is higher than the threshold.

4. The comfortable temperature control apparatus used for the vehicle according to any one of claims 1 to 3, **characterized in that**
the heat flux sensor includes an insulation base material (100) composed of a thermoplastic resin, wherein
a plurality of first via holes (101) and a plurality of second via holes (102) are formed penetrating through the insulation base material in a thickness direction and a first interlayer connection member (130) and a second interlayer connection member (140) are embedded to each of the first via holes and each of the second via holes respectively, the first and second interlayer connection members being formed with mutually different metals and being connected serially and alternately; and
at least one of the metals that form the first and second interlayer connection members is composed of a sintered alloy in which a plurality of metal atoms are sintered in a state where a crystal structure of a plurality of metals is maintained in the metals.

5. The comfortable temperature control apparatus used for the vehicle according to claim 4, **characterized in that**
the heat flux sensor includes a front surface protection member (110) and a back surface protection member (120) arranged therein, the front surface protection member including a front surface pattern (111) formed on a front surface (100a) of the insulation base material and the back surface protection member including a back surface pattern (121) formed on a back surface (100b) opposite to the front surface; and
the back surface protection member, the insulation base material and the surface protection member are integrated.

6. A comfortable temperature control apparatus for a vehicle **characterized in that**, the apparatus comprises:
a temperature-change element (20) that changes the temperature thereof by being energized;
a heat flux sensor (10) provided on the temperature-change element, outputting a sensor signal corresponding to the heat flux;
a heat diffusion layer (40) disposed at an opposite side of a portion contacting the temperature-change element in the heat flux sensor; and
a control unit (2) that energizes the temperature-change element so as to adjust the temperature of the temperature-change element,
wherein
in a space defined between upholstery (401) disposed inside a vehicle cabin and a panel (402) disposed at an outer-side of the vehicle cabin, an upholstery side, the heat diffusion layer, the heat flux sensor and the heat change element are arranged in this order, the upholstery forming a contour inside the vehicle cabin and the panel forming a contour of the vehicle;
the heat flux sensor outputs the sensor signal corresponding to the heat flux between the temperature-change element and the space inside the vehicle cabin; and
the control unit adjusts an energization of the temperature-change element, based on the sensor signal outputted by the heat flux sensor, such that the heat flux between the temperature-change element and the space inside the vehicle cabin has a predetermined value.

7. A comfortable temperature control apparatus for a vehicle **characterized in that** the apparatus comprising:
a temperature-change element (20) that changes the temperature thereof by being energized;
a heat flux sensor (10) provided on the temperature-change element, outputting a sensor signal corresponding to the heat flux;
a heat diffusion layer (40) disposed at an opposite side of a portion contacting the temperature-change element in the heat flux sensor; and a control unit (2) that energizes the temperature-change element so as to adjust the temperature of the temperature-change element,
wherein
in a backrest portion (202) of a front seat disposed in a vehicle cabin, a cover surface side of a back seat side, the heat diffusion layer, the heat flux sensor and the heat change element are arranged in this order;
the heat flux sensor outputs the sensor signal corresponding to the heat flux between the temperature-change element and the cover surface; and the control unit adjusts an energization of the temperature-change element, based on the sensor signal outputted by the heat flux sensor, such that the heat flux between the cover surface and the temperature-change element has a predetermined value.
